# EUROPÄISCHE PATENTANMELDUNG

(11) **EP 1 354 862 A1**
(43) Veröffentlichungstag der Anmeldung: **22.10.2003**
(21) Anmeldenummer: 02090144.3
(22) Anmeldetag: 16.04.2002
(51) Int. Cl.: C06B 45/00, C06B 47/02

(54) **Verfahren zum Herstellen von kryogenen, monergolen Festtreibstoffen und danach erzeugte Festtreibstoffe**

(71) Anmelder: Lo, Roger E., 13465 Berlin (DE); Adirim, Harry, Dipl.-Ing., 10827 Berlin (DE)
(72) Erfinder: Die Erfindernennung liegt noch nicht vor
(74) Vertreter: Hannig, Wolf-Dieter, Dipl.-Ing.

(57) **Zusammenfassung**

Die Erfindung betrifft ein Verfahren zum Herstellen von auf unter Raumtemperatur gekühlten (kryogenen), monergolen Feststofftreibstoffen für Raketenantriebe, insbesondere aus heterogenen Flüssig-Fest-Treibstoffen, bei denen mindestens einer der Reaktanden als Oxydator oder Brennstoff eine bei Normaltemperatur flüssige oder gasförmige Phase enthält, beispielsweise Emulsionen nicht ineinander löslicher flüssiger Komponenten, Suspensionen von festen in flüssigen Komponenten oder flüssigkeitsgetränkte Schüttungen. Des weiteren betrifft die Erfindung einen kryogenen Festtreibstoff für Raketenantriebe, insbesondere heterogene quasi-monergole Brennstoff-Oxydator-Kombinationen.
Der Erfindung liegt die Aufgabe zugrunde, die Leistungsfähigkeit der Kryofesttreibstoffe im Vergleich zu konventionellen lagerfähigen Feststoffantrieben, Hybridantrieben oder Flüssigkeitstriebwerken zu erhöhen, ihre Lagerfähigkeit und Wirtschaftlichkeit bei Vermeidung eines aufwendigen Flüssigkeitsmanagements unter gleichzeitigem Wegfall einer permanenten Zündung der Kryofesttreibstoffe in einfacher Weise zu verbessern.

Gelöst wird diese Aufgabe dadurch, dass die mindestens eine flüssige oder gasförmige Phase als Reaktand in Form von Brennstoff oder Oxydator in eine feste, mit untereinander in Verbindung stehenden Hohlräumen ausgestattete Struktur aus zur flüssigen Phase komplementär gebildeten Reaktanden verbracht und die flüssige Phase durch Einfrieren in eine unterhalb Normaltemperatur beständige kryogene feste Phase innerhalb der festen Struktur überführt wird.

## Beschreibung

Die Erfindung betrifft ein Verfahren zum Herstellen von auf unter Raumtemperatur gekühlten (kryogenen), monergolen Feststofftreibstoffen für Raketenantriebe, insbesondere aus heterogenen Flüssig-Fest-Treibstoffen, bei denen mindestens einer der Reaktanden als Oxydator oder Brennstoff eine bei Normaltemperatur flüssige oder gasförmige Phase enthält, beispielsweise Emulsionen nicht ineinander löslicher flüssiger Komponenten, Suspensionen von festen in flüssigen Komponenten oder flüssigkeitsgetränkte Schüttungen.

Die Erfindung betrifft ferner einen auf unter Raumtemperatur gekühlten (kryogenen) Festtreibstoff für Raketenantriebe, insbesondere eine heterogene quasi-monergole Brennstoff-Oxydator-Kombination, bei der mindestens einer der Reaktanden eine bei Normaltemperatur flüssige oder gasförmige Phase ist, beispielsweise Emulsionen nicht ineinander löslicher flüssiger Komponenten, Suspensionen von festen in flüssigen Komponenten oder flüssigkeitsgetränkte Schüttungen.

Damit zielt die Erfindung auf das technische Gebiet der Treibstoffe für Raketenantriebe und darin solche zur Herstellung und zum Aufbau von Feststofftreibsätzen. Als solche werden im Rahmen der Erfindung in bestimmten geometrischen Formen vorliegende, einfache oder zusammengesetzte Treibstoffblöcke verstanden. Dies umfasst auch eventuelle Ein- oder Anbauten, die bei ungekühlt lagerfähigen Treibstoffen aus mechanischen Gründen, als Dichtungen, als Abbrand-Inhibitoren oder aus anderen Gründen angebracht sind, bei kryogenen Feststoffen zudem auch als Stütz-, Füllungs-, Entleerungs- oder Kühlvorrichtungen. In beiden Fällen werden diese im Betrieb beim Abbrand ganz oder teilweise verbrannt.

Bei allen bekannten Raketentreibstoffen liegen die Komponenten im flüssigen und/oder festen Aggregatzustand vor und dienen als Oxydator oder als Brennstoff. Manchen haben auch noch andere Funktionen beispielsweise als Binder oder Additive. Unabhängig vom Aggregatzustand werden Treibstoffe, welche Oxydator- und Brennstofffunktion in sich vereinigen, Monergole (Einkomponententreibstoffe) genannt. Bei Verteilung der Funktionen auf getrennte Komponenten spricht man von Diergolen.
Monergole können sowohl nach ihrem Phasenaufbau und ihrer molekularen Zusammensetzung als auch nach ihrem Aggregatzustand homogen oder heterogen sein. Beispiele für homogene Monergole als Flüssigtreibstoff sind Wasserstoffperoxyd, Hydrazin und Nitroglycerin. Heterogene Monergole umfassen beispielsweise Emulsionen nicht ineinander. löslicher flüssiger Komponenten.

Es sind eine ganze Reihe von Treibstoffen für Raketenantriebe bekannt, bei denen mindestens eine der Komponenten eine bei Normaltemperatur flüssige Phase ist (US 2 802 332, US 3 367 268, US 3 398 215, US 3 687 746, US 3 697 455, US 3 703 080).
Die US 2 802 332 beschreibt einen Treibsatz einer Flüssigkeitsrakete, die eine Struktur aufweist, welche aus einer Vielzahl von Zellen gebildet ist. In diesen Zellen befindet sich zumindest ein Reaktand. Die Wände der zellähnlichen Struktur bestehen aus Polyethylen, Teflon oder Silikongummi. Die einzelnen Zellen sind durch Öffnungen miteinander verbunden.

Der Stand der Technik nach US 3 367 268 betrifft einen hybriden Raketentreibsatz, der aus einer festen polymerischen zellähnlichen Gummisubstanz aufgebaut ist, welche eine interzellulare Matrix bildet. In dieser Matrix sind pulverförmige Festbrennstoffe, beispielsweise Leichtmetallpulver der Gruppe II und III des PSE, sowie verstärkende Fasern eingebettet. Die Poren enthalten einen flüssigen Oxydator.

In der US 3 398 215 ist ein Verfahren zur Herstellung eines Raketentreibsatzes beschrieben, bei dem ein aushärtbares Gummipolymer mit pulverförmigem Metallbrennstoff und Aushärter vermischt sowie mit einem organischen Treibmittel behandelt wird. Das Gummipolymer ist aus der Gruppe der gummiartigen Kohlenwasserstoffe und der halogenierten Kohlenwasserstoffgummis ausgewählt. Als Metallbrennstoff werden Pulver aus Aluminium, Bor, Titan, Beryllium, Magnesium und Lithium eingesetzt. Das organische Treibmittel siedet bei 70 bis 200 °C und ist mit dem Polymer verträglich. Es verdampft bei einer Aushärtungstemperatur von 120 °C bis 205 °C in den Komposit hinein, wobei sich Poren bzw. Zellen in der Matrix ausbilden. Die schwammähnliche Matrix enthält den Metallbrennstoff und bildet eine zusammenhängende Phase. Die Matrix wird alsdann in eine Oxydatorflüssigkeit getaucht, so dass sich die Poren mit der Oxydatorflüssigkeit füllen.

Allen diesen bekannten Lösungen ist der Nachteil gemeinsam, dass sie nur ein sehr geringes Leistungsniveau erreichen und kompliziert in ihrem Aufbau und ihrer Handhabung sind.

Es ist auch bekannt, Treibsätze in sehr unterschiedlichen geometrischen Formen herzustellen. Sie können aber grob in zwei Kategorien eingeteilt werden, nämlich Innenbrenner mit mehr radial gerichtetem Abbrand und Stirnbrenner mit mehr axial gerichtetem Abbrand.

Neben den monergolen Treibstoffen sind solche bekannt, die Brennstoff und Oxydator als getrennte Elemente in verschiedenen geometrischen Anordnungen enthalten. Beispiele sind radial brennende Scheibenstapel oder Rod-in-Matrix-Stirnbrenner (R.E.LO, N.EISENREICH; "Modulare und kryogene Feststofftreibsätze - eine neue Klasse chemischer Raketenantriebe", Deutscher Luft- und Raumfahrtkongress, DGLR-JT98-104; Bremen, 7.10.1998; Jahrbuch 1998, Band 2, S. 1231). Solche Anordnungen werden als modulare Treibsätze bezeichnet. Modulare Treibsätze mit großen Modulelementen gehören zu den Diergolen (Zweikomponententreibstoffe). Der Abbrand erfolgt in Diffusionsflammen als sogenannter Grenzschichtabbrand, bei welchem der Übergang zu unkontrollierten Explosionen oder Detonationen nicht oder nicht leicht erfolgen kann.

Von den modularen Treibstoffen sind auch solche mit eingekapselten Komponenten zu unterscheiden. Ziel der Einkapselung ist die gegenseitige Abtrennung reaktiver Flüssigkeiten und damit eine Verbesserung der Langzeitlagerfähigkeit. In den Kapseln können Flüssigkeiten oder sehr empfindliche Reaktanden eingeschlossen werden. Kleine Kapseln werden ungerichtet in Bindern eingeschlossen, Makrokapseln sind ausgerichtet angeordnet und mit einem Binder oder aushärtenden Festtreibstoff vergossen. Bei steigender Kapselgröße (siehe R.M.MCCURDY et al. "Solid Propellant Grain Containing Metal Macrocapsules of Fuel and Oxidizer", US 3 527 168) und gerichteter Anordnung gehen Kapseltreibstoffe in eine Unterklasse der Rod-in-Matrix-Treibstoffe über.

Mit kleiner werdender Elementabmessungen und insbesondere, wenn die Elemente nicht mehr gleichmäßig, sondern statistisch angeordnet sind, gibt es dagegen bei allen bekannten Treibstoffen einen fließenden Übergang zu den heterogenen Monergolen. Die dabei entstehenden Treibstoffkombinationen lassen sich am besten als "Quasi-Monergole" bezeichnen.

Dieselbe relativ schlechte Abgrenzbarkeit zwischen Monergolen und Diergolen findet man bei den gefüllten Schwammtreibstoffen und umgossenen Treibstoffschüttungen. Diese beiden Treibstoffklassen haben mit den modularen Treibsätzen auch gemein, dass sie mit lagerfähigen Komponenten kaum für die praktische Anwendung in Raketenantrieben interessant sind, allerdings sind die Gründe unterschiedlich. Bei den modularen Festtreibstoffen ist es die eng begrenzte Auswahl an energetisch interessanten lagerfähigen Treibstoffen. Wegen der größeren Auswahl bei flüssigen Treibstoffen gilt diese Begrenzung bei den fest-flüssig heterogenen Schüttungen und Schwämmen nur für die feste Phase. Die eigentliche Beschränkung stammt aber von ihrer nur sehr bedingten Einsetzbarkeit unter Triebwerksbedingungen, wo die Separation der flüssigen Phase unbedingt vermieden werden muss. Einkapselung ist eine mögliche Lösung, die aber an den erforderlichen komplizierten Herstellungsbedingungen krankt. Wenn die Kapseln zur Größe von Stangen anwachsen, wie bei modularen Rod-in-Matrix-Treibsätzen, ist die Methode zur Verbrennung von Flüssigkeiten nicht mehr geeignet.

Neben den lagerfähigen Feststofftreibsätzen wurden solche aus gefrorenen Treibstoffen vorgeschlagen, deren Komponenten bei Normaltemperatur Flüssigkeiten oder Gase sind. Solche Treibstoffe werden hier als Kryofesttreibstoffe (Cryogenic Solid Propellants -CSP) bezeichnet.

Monergole CSP bestehen aus eingefrorenen, bei Zimmertemperatur fluiden Monergolen. Modulare CSP setzen sich aus mindestens einem gefrorenen Element zusammen, das nicht für sich alleine brennbar ist (US 3 137 127). Der Abbrand modularer, nicht monergoler Treibstoffelemente ist grundsätzlich ein diffuser Grenzschichtabbrand und als solcher vom Zustrom von Reaktanden abhängig. Wenn dieser nicht durch eine kräftige Strömung, sondern nur durch Konvektion erfolgt, ist die Reaktion unregelmäßig und schleppend, wenn sie überhaupt erfolgt. Daher benötigen modulare Treibsätze mindestens ab einer gewissen Größe der Elemente einen oder mehrere permanente Zündfackelgeneratoren (US 6 311 479).

Bei diesem Stand der Technik liegt der Erfindung die Aufgabe zugrunde, die Leistungsfähigkeit der Kryofesttreibstoffe im Vergleich zu konventionellen Feststoffantrieben, Hybridantrieben oder Flüssigkeitstriebwerken zu erhöhen, ihre Lagerfähigkeit und Wirtschaftlichkeit bei Vermeidung eines aufwendigen Flüssigkeitsmanagements unter gleichzeitigem Wegfall einer permanenten Zündung der Kryofesttreibstoffe in einfacher Weise zu verbessern.

Diese Aufgabe wird durch ein Verfahren der eingangs genannten Gattung mit den kennzeichnenden Merkmalen des Anspruches 1 und durch den Festtreibstoff mit den Merkmalen des Anspruches 10 gelöst.
Vorteilhafte Ausgestaltungen sind den Unteransprüchen entnehmbar.

Das erfindungsgemäße Verfahren zeichnet sich vor allem dadurch aus, dass durch das Einfrieren der flüssigen Phase bei den heterogenen Flüssig-Fest-Treibstoffen letztere zu kryogenen, monergolen Festtreibstoffen werden, wodurch die permanente Zündung entfallen kann und Probleme des Flüssigkeitsmanagements, welche bei normalen Flüssig-Fest-Quasimonergolen auftreten, umgangen werden.

Die Erfindung deckt somit alle quasi-monergolen Brennstoff-Oxydator-Kombinationen ab, bei welchen mindestens eine der Komponenten eine gefrorene Flüssigkeit ist.

Die Erfindung führt zu erheblichen Leistungssteigerungen von Trägerraketen. Neben der Umweltfreundlichkeit des Antriebes führt die Erfindung des weiteren bei Wahl geeigneter Treibstoffkandidaten wie z.B. SOX oder SH₂O₂ in Verbindung mit festen Kohlenwasserstoffen wie PE, PU, HTPB zu signifikanten Betriebs- und somit Startkosteneinsparungen. Trotz der offensichtlichen, hier nicht relevanten, technologischen Probleme kryogener Feststoffraketen besteht für diese ein potentiell sehr großer Markt in der Raketentechnik.

Weitere Vorteile und Einzelheiten ergeben sich aus der nachfolgenden Beschreibung unter Bezugnahme auf die beigefügten Zeichnungen.

Die Erfindung soll nachstehend an einem Ausführungsbeispiel näher erläutert werden.

Es zeigen
- Fig. 1: einen Schnitt durch einen Polymerschwamm als Feststoffstruktur mit eingelagerter kryogener Phase,
- Fig. 2: einen Schnitt durch einen Aluminiumschwamm als Feststoffstruktur mit eingelagerter kryogener Phase und
- Fig. 3: einen Schnitt durch eine umgossene Schüttung aus Polyäthylen und kryogener Phase.

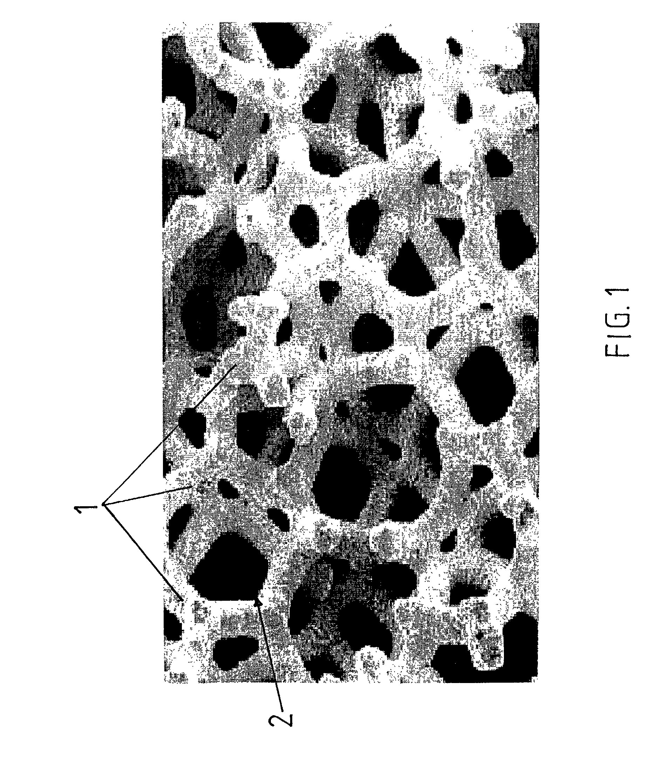

Ein Raketentreibsatz aus erfindungsgemäßem Feststofftreibstoff soll mit dem erfindungsgemäßen Verfahren hergestellt werden.
Der Feststofftreibstoff soll -wie Fig. 1 zeigt- aus einem Polymerschwamm **1**, beispielsweise aus Polyäthylen, als Brennstoff und einer kryogenen Oxydatorphase **2**, beispielsweise aus gefrorenem Wasserstoffperoxyd, bestehen.
Der Schwamm **1** als feste Phase wird zunächst an der inneren Isolation einer nichtdargestellten Brennkammerwand durch Verklebung befestigt und dann mit Wasserstoffperoxid unter Ausnutzung von Kapillarkräften oder eines Druckgefälles gefüllt und bei Bedarf anschließend durch Unterkühlung im Schwamm **1** eingefroren. Das Wasserstoffperoxyd verbleibt als kryogene Phase **2** im Schwamm **1.**
Natürlich ist es auch möglich, ohne die Erfindung zu verlassen, den Schwamm **1** direkt in die Brennkammer hineinzuschäumen.

Die Verbrennung des erfindungsgemäßen Festtreibstoffes erfolgt dann analog zu der klassischen Feststoffverbrennung in der Brennkammer, wobei der Treibstoff mittels eines Zünders angezündet wird.

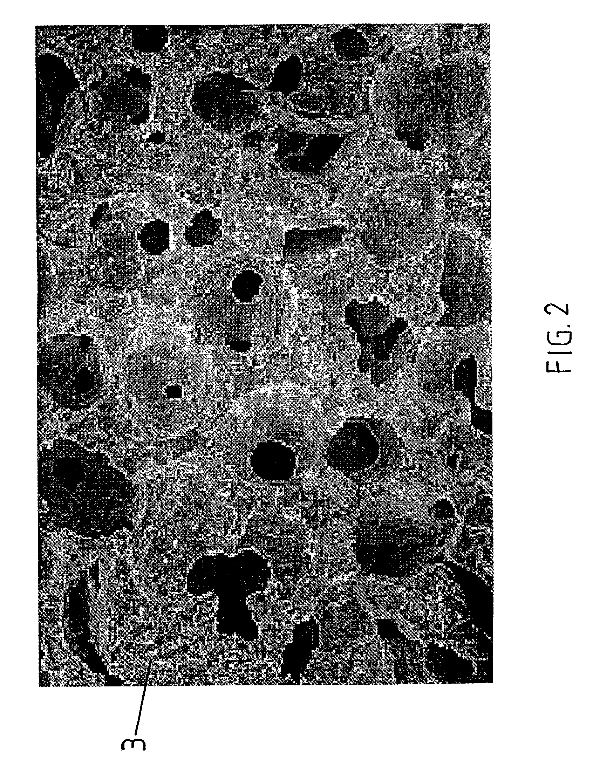

Fig. 2 zeigt ein Beispiel, bei dem als feste Phase, ein Aluminiumschwamm **3** eingesetzt wird, dessen Poren mit gefrorenem Sauerstoff verfüllt sind. Die Herstellung des erfindungsgemäßen Feststofftreibstoffes erfolgt wie vordem beschrieben.

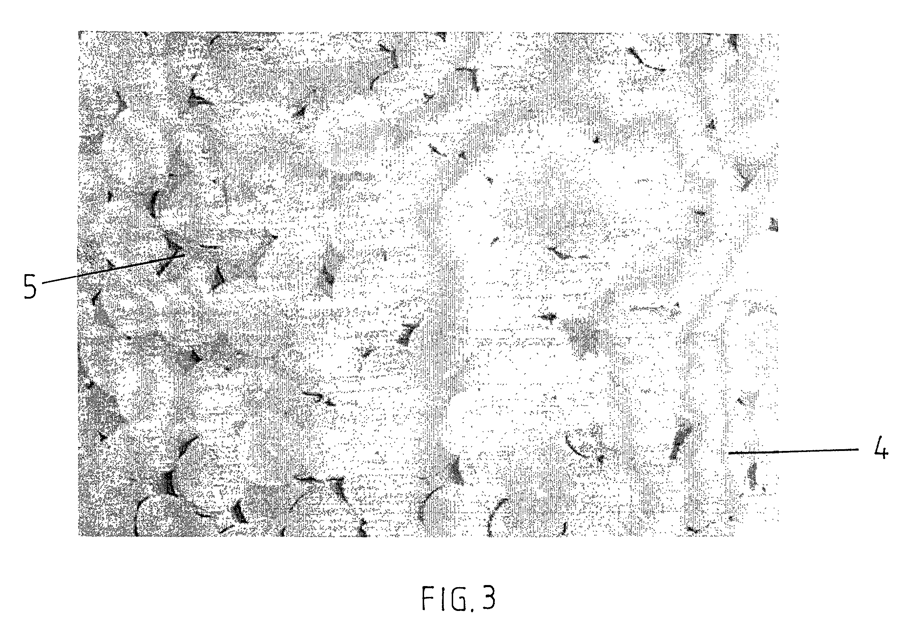

Fig. 3 stellt eine Polyäthylenschüttung **4** dar, deren Hohlräume mit einem bei Raumtemperatur flüssigen Oxydator **5** gefüllt sind, der nach dem Füllen eingefroren wurde.
Die nachfolgende Tabelle zeigt die Anwendungsbreite der vorliegenden Erfindung auf, in der jeweils zwei Komponenten aufgeführt sind, wobei austauschbar immer eine der Komponenten den Oxydator und die andere den Brennstoff repräsentiert. Jede Komponente kann darüber hinaus auch eine homogene oder heterogene Mischung verschiedener Stoffe darstellen. Insbesondere wird darauf hingewiesen, dass natürlich auch hochenergetische Materialien, beispielsweise Vertreter der "High Energy Density Matter" (HEDM), als Komponenten oder Zusätze in Frage kommen, beispielsweise disperse Atome oder Moleküle in einer stabilisierenden Matrix, gespannte Verbindungen (z.B. CUBAN), schwach kovalente Verbindungen (Polystickstoff), angeregte Atome oder Moleküle (Triplet-Helium) oder metallischer Wasserstoff.
Die kryogene Temperatur führt zu einer Stabilisierung der HEDM, die absolut einsatzrelevant ist.

Es wird auch nicht auf die unterschiedlichen Möglichkeiten des topologischen Zusammenhangs der Komponenten eingegangen, d.h. es kann sich in der folgenden Tabelle in jedem Fall, soweit zutreffend, um Schwämme oder Schüttungen handeln, auch wenn diese nicht als Beispiele genannt werden. Als "lagerfähig" werden Stoffe bezeichnet, die bei Zimmertemperatur den angegebenen Aggregatzustand haben, als "kryogen", wenn sie aus einem der oben genannten Gründe in der Regel Kühlung brauchen.
Es erübrigt sich, darauf hinzuweisen, dass in Feststoffraketentriebwerken alle Komponenten von ihrer Natur her dieselbe Ausgangstemperatur besitzen.

**Tabelle:**

| Morphologie der kryogenen Quasi-Monergole | | |
|---|---|---|
| Komponente 1 | Komponente 2 | Beispiele |
| Lagerfähiger Feststoff | Kryogener Feststoff | Kunststoff-Schwamm getränkt mit gefrorenem Wasserstoffperoxyd (SH₂O₂) oder Sauerstoff (SOX); gefrorenes SH₂O₂ oder SOX mit eingebetteten Brennstoff-Partikeln aus Kunststoff oder Metall |
| Lagerfähiger Feststoff | Kryogene Flüssigkeit | Kapseln oder Schläuche mit kryogener Komponente in Feststoff |
| Kryogener Feststoff | Kryogener Feststoff | Gefrorener Sauerstoff mit gefrorenem Brennstoff in jeder möglichen quasi-monergolen Komposition, z.B. SMOX (Solid Methan & Solid Sauerstoff) |
| Kryogener Feststoff | Lagerfähige Flüssigkeit | Gefrorenes H₂O₂ mit eingekapseltem flüssigem Brennstoff |
| Kryogener Feststoff | Kryogene Flüssigkeit | Kombinationen von gefrorenen Kohlenwasserstoffen mit eingekapseltem flüssigem Sauerstoff |
| Kryogene Flüssigkeit | Kryogene oder lagerfähige Flüssigkeit | Schüttungen von Kapseln mit den beiden Komponenten, die durch zusätzlichen Binder verklebt sind |

## Patentansprüche

1. Verfahren zum Herstellen von auf unter Raumtemperatur gekühlten (kryogenen), monergolen Feststofftreibstoffen für Raketenantriebe, insbesondere aus heterogenen Flüssig-Fest-Treibstoffen, bei denen mindestens einer der Reaktanden als Oxydator oder Brennstoff eine bei Normaltemperatur flüssige oder gasförmige Phase enthält, beispielsweise Emulsionen nicht ineinander löslicher flüssiger Komponenten, Suspensionen von festen in flüssigen Komponenten oder flüssigkeitsgetränkte Schüttungen, **dadurch gekennzeichnet, dass** die mindestens eine flüssige oder gasförmige Phase als Reaktand in Form von Brennstoff oder Oxydator in eine feste, mit untereinander in Verbindung stehenden Hohlräumen ausgestattete Struktur aus zur flüssigen Phase komplementär gebildeten Reaktanden verbracht und die flüssige oder gasförmige Phase durch Einfrieren in eine unterhalb Normaltemperatur beständige kryogene feste Phase innerhalb der festen Struktur überführt wird.

2. Verfahren nach Anspruch 1, **dadurch gekennzeichnet, dass** als feste Struktur ein offenporiger Schwamm, insbesondere ein Schwamm aus Kunststoff- und/oder Metallschaum, beispielsweise Polyäthylen-, Polyurethan-, HTBP-, GAP-, Aluminium-, Magnesium- oder Berylliumschaum, verwendet wird.

3. Verfahren nach Anspruch 2, **dadurch gekennzeichnet, dass** als feste Struktur eine umgossene Schüttung aus Polyäthylen, Polyurethan, HTPB, GAP, AP, Aluminium, Magnesium oder Beryllium bzw. deren Mischungen verwendet wird.

4. Verfahren nach Anspruch 1 bis 3, **dadurch gekennzeichnet, dass** die flüssige Phase in die feste Struktur durch Tauchen und/oder Tränken derselben eingebracht wird.

5. Verfahren nach Anspruch 1, **dadurch gekennzeichnet, dass** als flüssige oder gasförmige Phase Sauerstoff, Kohlenwasserstoff, Wasserstoffperoxyd oder ein HEDM-Treibstoff verwendet wird.

6. Verfahren nach Anspruch 1, **dadurch gekennzeichnet, dass** die feste Struktur durch Einfrieren von flüssigem Brennstoff oder Oxydator, insbesondere Sauerstoff, Kohlenwasserstoff, Wasserstoffperoxyd oder eiens HEDM-Treibstoffes, erzeugt wird.

7. Verfahren nach Anspruch 1 und 6, **dadurch gekennzeichnet, dass** die flüssige Phase zunächst verkapselt, anschließend mit der festen Struktur vermischt und durch einen Binder verklebt wird.

8. Verfahren nach Anspruch 1 und 6, **dadurch gekennzeichnet, dass** die flüssige Phase verkapselt, vor Einfrieren der festen Struktur mit dieser vermischt und anschließend beide gemeinsam eingefroren werden.

9. Verfahren nach einem der vorherigen Ansprüche, **dadurch gekennzeichnet, dass** die Abbrandgeschwindigkeit durch die Wahl einer besonderen Hohlraumgröße in der festen Struktur eingestellt wird.

10. Auf unter Raumtemperatur gekühlter (kryogener) Festtreibstoff für Raketenantriebe, insbesondere eine heterogen quasi-monergole Brennstoff-Oxydator-Kombination, bei der mindestens einer der Reaktanden eine bei Normaltemperatur flüssige oder gasförmige Phase ist, beispielsweise Emulsionen nicht ineinander löslicher flüssiger Komponenten, Suspensionen von festen in flüssigen Komponenten oder flüssigkeitsgetränkte Schüttungen, **dadurch gekennzeichnet, dass** mindestens einer der Reaktanden einen durch Kühlung in den stabilen Zustand überführten Feststoff enthält und mindestens einer der Reaktanden als eine zusammenhängende feste Phase mit einer untereinander in Verbindung stehenden Porenstruktur ausgebildet ist.

11. Festtreibstoff nach Anspruch 10, **dadurch gekennzeichnet, dass** die feste Phase aus Kunststoffschäumen, insbesondere PUR, PE, HTPB-, GAP-Schäumen, Metallschäumen, beispielsweise Aluminium-, Magnesium- oder Berylliumschäumen, oder deren Gemischen besteht.

12. Festtreibstoff nach Anspruch 10, **dadurch gekennzeichnet, dass** die feste Phase aus dem stabilen Feststoff besteht.

13. Festtreibstoff nach Anspruch 10, **dadurch gekennzeichnet, dass** der durch Kühlung in den stabilen Zustand überführte Feststoff aus Sauerstoff, Kohlenwasserstoff, Wasserstoffperoxyd oder einem HEDM-Treibstoff besteht.

14. Festtreibstoff nach einem der vorherigen Ansprüche 10 bis 13, **dadurch gekennzeichnet, dass** die feste Phase aus einer Schüttung beliebig geformter Einzelstücke besteht, deren Hohlräume miteinander in Verbindung stehen, in die eine gefrorene Flüssigkeit als Reaktand eingelagert ist.

15. Festtreibstoff nach Anspruch 14, **dadurch gekennzeichnet, dass** der gefrorene Reaktand nicht in homogener Form, sondern selbst als Schüttung durch Einmischen in die Hohlräume des ersten vorliegt.

16. Festtreibstoff nach einem der vorherigen Ansprüche 10 bis 15, **dadurch gekennzeichnet, dass** die feste Phase mit einem Schutzüberzug versehen ist, welcher die beiden Reaktanden chemisch voneinander isoliert.
